(19) Europäisches Patentamt
European Patent Office
Office européen des brevets

(11) **EP 2 738 543 A2**

(12) **EUROPÄISCHE PATENTANMELDUNG**

(43) Veröffentlichungstag:
**04.06.2014 Patentblatt 2014/23**

(51) Int Cl.:
***G01N 21/03*** *(2006.01)*

(21) Anmeldenummer: **13195172.5**

(22) Anmeldetag: **29.11.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **03.12.2012 DE 102012222039**

(71) Anmelder: **Fraunhofer-Gesellschaft zur
Förderung der
angewandten Forschung e.V.
80686 München (DE)**

(72) Erfinder:
• **Fuchs, Frank
79104 Freiburg (DE)**
• **Hugger, Stefan
79106 Freiburg (DE)**

(74) Vertreter: **Lemcke, Brommer & Partner
Patentanwälte Partnerschaft mbB
Patentanwälte Partnerschaft mbB
Bismarckstraße 16
76133 Karlsruhe (DE)**

(54) **Interferometrische Messzelle, Spektrometer und Verfahren zur spektroskopischen Messung**

(57)    Die Erfindung betrifft eine interferometrische Messzelle (1) zur mikroskopischen Differenzspektroskopie, umfassend einen ersten Strahlteiler (2), zur Aufteilung eines Ausgangsstrahls (7) in einen Messstrahl (7a) und einen Referenzstrahl (7b) sowie optische Mittel, die derart angeordnet und ausgebildet sind, dass Messstrahl (7a) und Referenzstrahl (7b) an einem Strahlausgang der Messzelle mittels eines optischen Strahlvereinigungselements (4) überlagert austreten, wobei die Messzelle (1) zur Durchführung optischer Spektroskopie, in Verbindung mit einer kohärenten abstimmbaren Lichtquelle ausgebildet ist, indem die Messzelle (1) eine Messtransmissionszelle (5a) umfasst, welche im Strahlengang des Messstrahls (7a) angeordnet ist und die Messzelle eine Referenztransmissionszelle umfasst, welche im Strahlengang des Referenzstrahls (7b) angeordnet ist, wobei Messtransmissionszelle (5a) und Referenztransmissionszelle (5b) jeweils zur Aufnahme von zumindest Trägermaterial ausgebildet sind und die Messzelle (1) derart ausgebildet ist, dass ein optischer Weg des Messstrahls (7a) zwischen Strahlteiler (2) und Strahlvereinigungselement (4) die gleiche optische Länge aufweist wie ein optischer Weg des Referenzstrahl (7b) zwischen Strahlteiler (2) und Strahlvereinigungselement (4).

Figur 1

**Beschreibung**

Die Erfindung betrifft eine interferometrische Messzelle gemäß Oberbegriff des Anspruchs 1 sowie ein Spektrometer gemäß Oberbegriff des Anspruchs 8 und ein spektroskopisches Verfahren gemäß Oberbegriff des Anspruchs 12.

Spektroskopische Untersuchungen im infraroten Spektralbereich (IR) sind in wässriger Umgebung durch die hohe Absorption von Wasser im infraroten Spektralbereich nur sehr eingeschränkt möglich. Jedoch liegen gerade im infraroten Spektralbereich die meisten charakteristischen Absorptionsbanden vieler organischer Gruppen.

Besonders in der Biotechnologie und in der Lebensmitteltechnik bieten sich Einsatzmöglichkeiten für IR-Technologien, wie z. B. In-Vitro-Messungen an biologischen Systemen oder Prozessüberwachung im Bereich Umwelttechnik.

Hier ist es aus dem Stand der Technik bekannt, Spektroskopiemethoden, wie FTIR-Spektroskopie oder ATR-Spektroskopie einzusetzen.

Nachteilig an der FTIR-Spektroskopie ist, dass Wasser im infraroten Spektralbereich stark absorbiert. Da Wasser somit nicht IR-durchlässig ist, sind diese Anwendungen auf Wasserfilmdicken bis etwa 10 $\mu$m beschränkt. Bei kleinen Probenkonzentrationen sind die Absorptionsstrukuren einer Probensubstanz im Wasser nur als kleine Abweichungen auf einem sehr hohen Untergrundsignal der Wasserabsorption zu detektieren.

Nachteilig an der ATR-Spektroskopie ist, dass mit dieser Technik nur die Oberflächen von Proben untersucht werden können.

Der vorliegenden Erfindung liegt daher die Aufgabe zugrunde, eine Vorrichtung bereitzustellen, deren Verwendung es ermöglicht, spektroskopische Untersuchungen im infraroten Spektralbereich in wässriger Umgebung mit einer Probenfilmdicke > als 10 $\mu$m durchzuführen. Weiterhin soll die Erfindung ein solches Spektrometer zur Verfügung stellen sowie ein Verfahren, dessen Verwendung es ermöglicht, die genannten Messungen durchzuführen.

Gelöst ist diese Aufgabe durch eine interferometrische Messzelle gemäß Anspruch 1 sowie durch ein Spektrometer gemäß Anspruch 8 und ein Verfahren gemäß Anspruch 12. Vorteilhafte Ausgestaltungen der interferometrischen Messzelle finden sich in den Ansprüchen 2 bis 7. Vorteilhafte Ausgestaltungen des Spektrometers finden sich in den Ansprüchen 9 bis 11. Vorteilhafte Ausgestaltungen des Verfahrens finden sich in den Ansprüchen 13 bis 15. Hiermit wird der Wortlaut sämtlicher Ansprüche explizit per Referenz in die Beschreibung einbezogen.

Die erfindungsgemäße interferometrische Messzelle ist vorzugsweise zur Durchführung des erfindungsgemäßen spektroskopischen Verfahrens ausgebildet. Das erfindungsgemäße spektroskopische Verfahren wird vorzugsweise mittels der erfindungsgemäßen interferometrischen Messzelle und/oder einer vorzugsweisen Ausführungsform hiervon durchgeführt.

Das erfindungsgemäße Spektrometer ist vorzugsweise zur Durchführung des erfindungsgemäßen spektroskopischen Verfahrens ausgebildet. Das erfindungsgemäße spektroskopische Verfahren wird vorzugsweise mittels des erfindungsgemäßen Spektrometers und/oder einer vorzugsweisen Ausführungsform hiervon durchgeführt.

Die Erfindung ist in der Erkenntnis des Anmelders begründet, dass die Kombination aus einem starren Interferometer mit gleichen optischen Weglängen für Mess- und Referenzstrahl und einem Spektrometer ein spektroskopisches Differenzmessverfahren ermöglicht, welches eine hintergrundfreie optische Messung liefert. Die Spektroskopie im Differenzmessverfahren führt zu einem deutlich besseren Signal- zu Rauschverhältnis im Vergleich zu konventionellen Spektrometern. Dadurch ergibt sich die Möglichkeit, optische Spektroskopie in wesentlich dickeren Wasserfilmen im infraroten Spektralbereich als bei konventionellen Verfahren durchzuführen.

In der vorliegenden Messzelle wird somit durch Ausnutzen der Kohärenz einer abstimmbaren Laserquelle durch destruktive Interferenz eine hintergrundfreie Messung ermöglicht, die die intensive Untergrundabsorption des Wassers mit optischen Mitteln unterdrückt.

Die erfindungsgemäße interferometrische Messzelle umfasst einen ersten Strahlteiler, zur Aufteilung eines Ausgangsstrahls in einen Messstrahl und in einen Referenzstrahl sowie optische Mittel, die derart angeordnet und ausgebildet sind, dass Mess- und Referenzstrahl an einem Strahlausgang der Messzelle mittels eines optischen Strahlvereinigungselements überlagert austreten. Wesentlich ist, dass die Messzelle zur Durchführung optischer Spektroskopie ausgebildet ist, indem die Messzelle eine Messtransmissionszelle umfasst, welche im Strahlengang des Messstrahls angeordnet ist und eine Referenztransmissionszelle, welche im Strahlengang des Referenzstrahls angeordnet ist. Die Messtransmissionszelle und die Referenztransmissionszelle sind jeweils zur Aufnahme von zumindest Trägermaterial ausgebildet. Weiterhin wesentlich ist, dass die Messzelle derart ausgebildet ist, dass optische Weg des Messstrahls zwischen Strahlteiler und Strahlvereinigungselement identisch zu einem optischen Weg des Referenzstrahls zwischen Strahlteiler und Strahlvereinigungselement ist.

Vorzugsweise ist die Messzelle zur Durchführung optischer Spektroskopie, vorzugsweise in Verbindung mit einer kohärenten abstimmbaren Lichtquelle ausgebildet.

Dabei bedeutet "identische optische Weglängen" im Rahmen dieser Beschreibung, dass die Differenz zwischen der optischen Weglänge des Messstrahls zwischen Strahlteiler und Strahlvereinigungselement und der optischen Weglänge des Referenzstrahls zwischen Strahlteiler und Strahlvereinigungselement kleiner als eine Wellenlänge eines Messlichts, vorzugsweise kleiner als eine halbe Wellenlänge des Messlichts, ist. Höchstvorzugsweise ist die Differenz zwischen der optischen Weglänge des Messstrahls zwischen Strahlteiler und Strahlvereinigungselement und der optischen Weglänge des Referenzstrahls zwischen Strahlteiler und Strahlvereinigungselement im Wesentlichen null.

Die erfindungsgemäße interferometrische Messzelle unterscheidet sich somit in mehreren wesentlichen Aspekten von vorbekannten Vorrichtungen: Zum einen umfasst die interferometrische Messzelle eine Messtransmissionszelle und eine Referenztransmissionszelle, welche Messtransmissionszelle im Strahlengang des Messstrahls und welche Referenztransmissionszelle im Strahlengang des Referenzstrahls angeordnet sind. Die Messtransmissionszelle und die Referenztransmissionszelle sind im Gegensatz zu vorbekannten Interferometeraufbauten, wie zum Beispiel dem Mach-Zehnder-Interferometer zwischen Strahlteiler und Strahlausgang in der interferometrischen Messzelle angeordnet.

Ein weiterer Unterschied ergibt sich durch die Ausbildung der Messzelle derart, dass die optische Weglänge des Messstrahls zwischen Strahlteiler und Strahlvereinigung gleich der optischen Weglänge des Referenzstrahls zwischen Strahlteiler und Strahlvereinigungselement ist. Durch dieses Merkmal ist es möglich, mit der interferometrischen Messzelle optische Spektroskopie zu betreiben, da nur durch die übereinstimmenden optische Weglängen des Messstrahls und des Referenzstrahls gewährleistet ist, dass bei einer Änderung der Wellenlänge des Messlichts, weiterhin die Überlagerung des Messstrahls mit dem Referenzstrahl am Strahlausgang durch das Strahlvereinigungselement zu destruktiver Interferenz führt.

Spektroskopie im Differenzmessverfahren bedeutet im Rahmen dieser Beschreibung, dass mittels eines Detektors ein Messsignal detektiert wird, welches der destruktiven Interferenz von Messstrahl und Referenzstrahl (Differenzsignal) entspricht. Die Intensität des Messstrahls ist dabei im Vergleich zur Intensität des Ausgangsstrahls durch Wechselwirkungen mit den optischen Elementen der interferometrischen Messzelle sowie des Trägermaterials und vorzugsweise des Probenmaterials (Hintergrundsignal und Probensignal) verändert. Die Intensität des Referenzstrahls hingegen ist im Vergleich zur Intensität des Ausgangsstrahls nur durch Wechselwirkungen mit den optischen Elementen der interferometrischen Messzelle sowie des Trägermaterials (Hintergrundsignal) verändert. Dadurch ergibt sich ein Signalunterschied im Differenzmessverfahren nur durch die unterschiedliche Zusammensetzung aufgrund des Probenmaterials: Hintergrundsignal + Probensignal - Hintergrundsignal. Somit ist eine hintergrundfreie optische Messung des Probenmaterials möglich.

Vorteilhaft ist hier dass diese hintergrundfreie optische Messung zu einem wesentlich besseren Signal zu Rauschverhältnis führt als die bestehenden Messtechniken, welche nur einen einzelnen Transmissionskanal verwenden. Berechnungen der Anmelderin haben ergeben, dass die relative Transmissionsänderung im Differenzkanal ohne das Hintergrundsignal um das Inverse von 1-m erhöht wird: Hierbei ist m die interferometrische Modulationseffizienz der interferometrischen Messzelle. Die interferometrische Modulationseffizienz m der interferometrischen Messzelle ergibt sich aus dem Verhältnis zwischen der durch die nur mit Trägermaterial gefüllten Referenz- bzw. Probenzelle transmittierten Intensität der Lichtquelle $I_0$ und der Intensität am Detektor:

$$I = I_0 \, (1\text{-}m).$$

Die interferometrische Modulationseffizienz m sollte über 95 % liegen und stellt ein Maß für die Qualität der Justage der interferometrischen Messzelle dar.

Aufgrund einer zusätzlichen Absorption im Messtransmissionskanal durch die Wechselwirkungen des Messstrahls mit dem Probenmaterial kommt es zu einer unterschiedlichen relativen Transmission $\Delta T$. Somit detektiert der erste Detektor bei destruktiver Interferenz die Intensität

$$I_{DIFF} = I_0 \, (1\text{-}m) + \Delta T \, I_0 + \delta.$$

$\delta$ ist hierbei ein Rauschanteil des Systems, z. B. durch den Detektor verursacht. Dies gilt für die typischerweise vorliegende Randbedingung $\Delta T \ll 1$. Ohne die Rauschanteile ergibt sich eine relative Signaländerung durch die zusätzliche Absorption des Probenmaterials in der Probenzelle von

$$\Delta T \, I_0 \, / \, I_0 \, (1\text{-}m) = \Delta T \, / \, (1\text{-}m)$$

Die relative Signaländerung wird somit um das Inverse von 1-m erhöht. Je höher die Modulationseffizienz der interferometrischen Messzelle liegt, desto größer ist die relative Signaländerung. Dadurch kann sich eine um den Faktor 100 größere relative Signaländerung ergeben als im Falle einer konventionellen Transmissionsmessanordnung. Durch die Messung im Bereich destruktiver Interferenz ist die am Detektor detektierte Intensität im Wesentlichen hintergrundfrei.

In einer vorzugsweisen Ausführungsform ist das Strahlvereinigungselement derart angeordnet und mit den weiteren Elementen der Messzelle zusammenwirkend ausgebildet, dass Messstrahl und Referenzstrahl an dem Strahlausgang der Messzelle destruktiv überlagert austreten. Die weiteren Elemente der Messzelle umfassen Umlenkvorrichtungen, welche derart ausgebildet und angeordnet sind, dass der in Messstrahl und Referenzstrahl aufgeteilte Strahlverlauf am Strahlausgang durch das Strahlvereinigungselement überlagert werden kann, bevorzugt sind die Umlenkvorrichtungen als Spiegel ausgebildet. Ein beispielhafter Aufbau ist z. B. auf der Basis des bekannten Mach-Zehnder-Interferometers möglich. Vorzugsweise ist der Strahlteiler als Strahlteilerwürfel, insbesondere bevorzugt als spiegelsymmetrischer Strahlteilerwürfel, oder als Strahlteilerplättchen ausgebildet. Ebenso ist bevorzugt das Strahlvereinigungselement als Strahlteilerwürfel, insbesondere bevorzugt als spiegelsymmetrischer Strahlteilerwürfel, oder Strahlteilerplättchen ausgebildet. Hierdurch ergibt sich ein Phasensprung aufgrund der Totalreflexion an Medien unterschiedlicher optischer Dichten innerhalb der Strahlteilerwürfel. Die Überlagerung der Strahlanteile mit Phasensprung und der Strahlanteile, die transmittiert ohne Phasensprung den Strahlteilerwürfel durchlaufen, ergibt vorzugsweise destruktive Interferenz. In diesem Differenzkanal wird also nur dann eine Intensität detektiert, wenn zwischen dem Messstrahl und dem Referenzstrahl ein Intensitätsunterschied besteht. Dieser Intensitätsunterschied ist durch die zusätzliche Absorption bedingt, die durch die in der Messtransmissionszelle vorliegende Probensubstanz auftritt.

Im Falle einer Kontrollmessung ohne eine Probensystem, das heißt in der Messtransmissionszelle und der Referenztransmissionszelle ist nur Trägermaterial vorhanden, kann im Differenzkanal bei einer ideal justierten interferometrischen Messzelle, das heißt, der optische Weglängenunterschied zwischen dem Referenzstrahl und dem Messstrahl ist null, kein Signal detektiert werden.

In einer vorzugsweisen Ausführungsform sind die Messtransmissionszelle und die Referenztransmissionszelle einstückig als eine Transmissionszelle ausgebildet, welche Transmissionszelle in einem Durchstrahlbereich der Messtransmissionszelle und einem Durchstrahlbereich der Referenztransmissionszelle äquivalent ausgebildet ist. Bevorzugt ist die Transmissionszelle zumindest in den von Mess- und Referenzstrahl durchstrahlten Bereichen mit gleicher Wandstärke ausgebildet. Hierdurch sind gleiche Messbedingungen für die Probenmessung und die Referenzmessung gewährleistet. Die Spektroskopie im Differenzmessverfahren ergibt ein Messsignal, welches der destruktiven Interferenz des Messstrahls und des Referenzstrahls entspricht.

Vorteilhaft ist hierbei, dass die Messung des Probenmaterials und die Messung des Referenzmaterials unter gleichen Bedingungen erfolgen. Dadurch ergibt sich ein Signalunterschied nur durch die unterschiedliche Zusammensetzung aufgrund des Probenmaterials. Somit ist eine hintergrundfreie optische Messung des Probenmaterials möglich.

In einer weiteren vorzugsweisen Ausführungsform umfassen die optischen Mittel zumindest einen optischen Kristall, welcher optische Kristall derart angeordnet und ausgebildet ist, dass der Strahlengang zumindest des Messstrahls und/oder des Referenzstrahls im Wesentlichen im optischen Kristall verläuft, bevorzugt dass der optische Kristall mehrteilig ausgebildet ist, insbesondere, dass der Strahlengang des Messstrahls im Wesentlichen in einem ersten Teilkristall und der Strahlengang des Referenzstrahls im Wesentlichen in einem zweiten Teilkristall verlaufen. Der optische Kristall fungiert in diesem Fall als Strahlteiler, als Umlenkvorrichtung für den Messstrahl und für den Referenzstrahl und als Strahlvereinigungselement. Vorteilhaft ist hier, dass dadurch keine Spiegel oder ähnliche Umlenkvorrichtungen und andere einzelne optische Komponenten eingesetzt werden müssen, die schwierig zu justieren sind und ebenso leicht dejustiert werden können. Vorzugsweise ist der optische Kristall beispielsweise aus Silizium oder Germanium ausgebildet. Hierdurch ergibt sich der Vorteil, dass mehrere, typischerweise zwei optische Flächen monolithisch in einem Kristall ausgebildet sind und somit eine Dejustage dieser beiden Flächen zueinander nahezu ausgeschlossen ist. Vorzugsweise ist der optische Kristall ganz oder zumindest in Teilelementen als ein Prisma ausgebildet, bevorzugt als Prisma, welches aus einer Mehrzahl Teilkristallen, insbesondere bevorzugt aus einer Mehrzahl Teilprismen, ausgebildet ist.

In einer weiteren vorzugsweisen Ausführungsform ist der optische Kristall mehrteilig ausgebildet und umfasst vier Teilkristalle. Die Teilkristalle sind als Prismen ausgebildet und derart angeordnet, dass der erste Teilkristall der Lichtquelle und der dritte Teilkristall dem Detektor zugewandt ist. Der zweite Teilkristall ist zwischen dem ersten und dem dritten Teilkristall im Strahlengang des Messstrahls angeordnet und der vierte Kristall ist zwischen dem ersten und dem dritten Teilkristall im Strahlengang des Referenzstrahls angeordnet. Vorzugsweise sind der erste und der zweite Teilkristall derart angeordnet und zusammenwirkend ausgebildet, dass sie als erster Strahlteiler fungieren und der dritte und der vierte Teilkristalle derart angeordnet und zusammenwirkend ausgebildet, dass sie als Strahlvereinigungselement fungieren

In einer weiteren vorzugsweisen Ausführungsform weist die interferometrische Messzelle zumindest ein Weglängenänderungselement auf, welches Weglängenänderungselement zur Änderung der optischen Weglänge des Messstrahls und/oder des Referenzstrahls ausgebildet ist. Das Weglängenänderungselement ist zur Änderung der optischen Weglänge des Messstrahls und/oder des Referenzstrahls ausgebildet. Mittels des Weglängenänderungselements kann die optische Weglänge des Messstrahls an den Weg des Referenzstrahls angepasst werden. Vorteilhafterweise wird die entsprechende Justage zum Abgleich der beiden optischen Weglängen durch ein Weglängenänderungselement im Strahlengang vereinfacht. Dadurch ist es nicht nötig, den gesamten Aufbau der interferometrischen Messzelle derart exakt zu justieren, da die Feinjustage durch das Weglängenänderungsprogramm erfolgen kann.

Bevorzugt erfolgt diese Änderung der optischen Weglänge des Messstrahls und/oder des Referenzstrahls mittels Verschieben des ersten Teilkristalls und des zweiten Teilkristalls relativ zueinander. Vorteilhaft ist hier, dass die Teilkristalle als solche nicht dejustiert sein können, da mehrere, typischerweise zwei optische Flächen monolithisch in einem Kristall ausgebildet sind und somit eine Dejustage dieser beiden Flächen zueinander nahezu ausgeschlossen ist. Somit kann der Weglängenabgleich durch ein Verschieben der wenigen optischen Kristalle zueinander erfolgen und weist dadurch nur eine geringe Ungenauigkeit auf. Ebenso vorteilhaft ist hier, dass kein zusätzliches optisches Bauteil vorgesehen werden muss, da die Teilprismen durch mechanische Elemente bewegt werden, wie zum Beispiel ein Piezostellelement.

Die Identität der beiden optischen Weglängen ist zwingend erforderlich, um mit der interferometrischen Messzelle Spektroskopie zu betreiben. Bei einer Abstimmung der beiden optischen Weglängen derart, dass die Differenz zwischen der optischen Weglänge des Messstrahls und der optischen Weglänge des Referenzstrahls einem ganzzahligem Vielfachen einer ersten Wellenlänge des Messlichts entspricht, ist für diesen Zustand die Bedingung für destruktive Interferenz am Strahlausgang erfüllt. Bei einer Änderung dieser Wellenlänge des Messlichts wäre jedoch entsprechend eine neue Justage erforderlich. Durch die Übereinstimmung der optischen Weglängen des Messstrahls und des Referenzstrahls ist sichergestellt, dass die Bedingung für konstruktive Interferenz und destruktive Interferenz an den jeweiligen Strahlausgängen für alle Wellenlängen des Messlichts erfüllt ist.

In einer weiteren vorzugsweisen Ausführungsform weist die interferometrische Messzelle als optisches Weglängenänderungselement zumindest ein Kohärenzstellglied auf. Das Kohärenzstellglied ist zur Änderung der optischen Weglänge des Messstrahls und/oder des Referenzstrahls ausgebildet und ist im Strahlengang des Messstrahls und/oder des Referenzstrahls angeordnet. Mittels des Kohärenzstellglieds soll eine möglichst kleine optische Wegdifferenz - im Idealfall Null - zwischen den beiden Teilstrahlen Messstrahl und Referenzstrahl eingestellt werden. Die Änderung der optischen Weglänge des Messstrahls und/oder des Referenzstrahls durch das Kohärenzstellglied kann auf verschiedene Weisen erfolgen:

In einer vorzugsweisen Ausführungsform erfolgt die Änderung der optischen Weglänge des Messstrahls und/oder des Referenzstrahls durch das Kohärenzstellglied mittels Temperaturstabilisierung. Hierbei ist die interferometrische Messzelle mit Mitteln zur Stabilisierung der Temperatur ausgestattet, derart, dass die Bereiche, in welchen Messstrahl einerseits und Referenzstrahl andererseits verlaufen, separat beheizt werden können. Hierdurch kann ein Temperaturunterschied eingestellt werden, der über eine Änderung der Ausdehnung und/oder des Brechungsindex dazu führt, dass die effektive optische Weglänge von Mess- und Referenzstrahl im Wesentlichen identisch ist.

In einer alternativen Ausführungsform erfolgt die Änderung der optischen Weglänge des Messstrahls und/oder des Referenzstrahls durch das Kohärenzstellglied mittels einer kleinen Verschiebung des optischen Kristalls relativ zu der optischen Achse des Strahlteilers. Vorzugsweise erfolgt die Verschiebung des optischen Kristalls entlang einer Geraden, welche 45 Grad zur optischen Achse des Strahlteilers geneigt verläuft. Eine Verschiebung, die kleiner ist als die Wellenlänge, verändert einen Anteil des in Luft, beziehungsweise außerhalb des optischen Kristalls, zurückgelegten Wegs im optischen Weg des Messstrahls und/oder des Referenzstrahls, der zum Abgleich der optische Weglänge verwendet werden kann. Das Kohärenzstellglied wirkt somit als optisches Weglängenänderungselement.

Gemäß einer weiteren vorzugsweisen Ausführungsform ist zumindest die Messtransmissionszelle derart in einen Trägermaterialkreislauf integrierbar ausgebildet, dass bei Verwendung ein erstes Trägermaterial, welches Probenmaterial aufweist, die Messtransmissionszelle durchströmt. Bevorzugt ist die Referenztransmissionszelle derart in einen Trägermaterialkreislauf integrierbar ausgebildet, dass bei Verwendung das erste oder ein separates, zweites Trägermaterial die Referenztransmissionszelle durchströmt. Insbesondere bevorzugt ist ein Durchflusskreislauf für das zweite Trägermaterial mit Umwälzmitteln für das zweite Trägermaterial vorgesehen, in welchem Durchflusskreislauf die Referenztransmissionszelle angeordnet ist. Hierdurch ergibt sich der Vorteil, dass Messungen an Durchflusssystemen möglich sind und somit eine kontinuierliche Überwachung von Prozessen erfolgen kann. Sofern ein Durchfluss durch die Messzelle im Messstrahl erfolgt, muss vorzugsweise bei der Referenzzelle im Referenzstrahl ebenfalls ein Durchfluss über einen Kreislauf mit entsprechender Trägerflüssigkeit erfolgen, um identische Bedingungen zu schaffen. Hier ist es vorteilhaft, bei einem Durchfluss laminare und nicht turbulente Strömungen zu erzeugen.

Die zuvor beschriebene Aufgabe ist weiterhin gelöst durch ein Spektrometer gemäß Anspruch 8. Das erfindungsgemäße Spektrometer umfasst vorzugsweise die oben beschriebene erfindungsgemäße interferometrische Messzelle bzw. bevorzugt eine vorzugsweise Ausführungsform der erfindungsgemäßen interferometrischen Messzelle.

Das erfindungsgemäße Spektrometer weist ebenfalls die vorgenannten Vorteile der erfindungsgemäßen interferometrischen Messzelle auf.

Das erfindungsgemäße Spektrometer umfasst eine vorzugsweise durchstimmbare kohärente Lichtquelle, zumindest einen Detektor und eine interferometrische Messzelle gemäß einem der Ansprüche 1 bis 7. Die interferometrische Messzelle ist zwischen der Lichtquelle und dem Detektor derart angeordnet, dass ein aus dem Strahlausgang austretender Lichtstrahl auf den Detektor trifft. Mittels des erfindungsgemäßen Spektrometers ist es möglich, optische Spektroskopie mit der interferometrischen Messzelle zu betreiben. Vorteilhaft ist hier, dass durch den Einsatz der interferometrischen Messzelle Spektroskopie im Differenzmessverfahren betrieben werden kann. Das Differenzmessverfahren ermöglicht wie oben beschrieben eine hintergrundfreie Messung, die im Vergleich zu konventionellen Messtechniken, die nur einen einzigen Transmissionskanal verwenden, eine hohe Genauigkeit und ein besseres Signal zum Rauschverhältnis aufweist.

In einer vorzugsweisen Ausführungsform umfasst das Spektrometer eine durchstimmbare Lichtquelle, insbesondere bevorzugt einen EC-Quantenkaskadenlaser. Der EC-Quantenkaskadenlaser ist ein Infrarot-Halbleiterlaser, der eine kohärente, spektral schmalbandig emittierende und breit durchstimmbare IR-Strahlungsquelle darstellt. Der Wellenlängenbereich liegt in einem Bereich um eine Zentralwellenlänge von etwa 9 $\mu$m, bevorzugt von etwa 25 % des infraroten Spektrums um die zentrale Wellenlänge von 9 $\mu$m. Vorteilhaft ist hier, dass der Einsatz des EC-Quantenkaskadenlaser als Lichtquelle eine Intensität des Ausgangsstrahls ergibt, die pro Spektralelement um einige Größenordnungen höher ist als bei vorbekannten Messverfahren, wie z. B. FTIR-Verfahren. Dadurch können hier auch, trotz der hohen Absorption des Wassers im infraroten Spektralbereich Messungen an Wasserfilmen zwischen 100 und 150 $\mu$m Dicke realisiert werden.

In einer weiteren vorzugsweisen Ausführungsform ist ein erster Detektor derart an dem Strahlausgang der interferometrischen Messzelle angeordnet und mit der Messzelle zusammenwirkend ausgebildet, dass der erste Detektor ein Differenzsignal detektiert, wobei das Differenzsignal die destruktive Interferenz des Messstrahls und des Referenzstrahls ist.

Der Aufbau der optischen Komponenten des Spektrometers ist vorzugsweise an den Aufbau eines Mach-Zehnder-Interferometers angelehnt. Die beiden Teilstrahlenmessstrahl und Referenzstrahl durchlaufen jedoch identische optische Weglängen. Am Strahlausgang werden Messstrahl und Referenzstrahl mittels eines Strahlteilers überlagert. Der Strahlteiler, zum Beispiel ein Strahlteilerwürfel oder ein Prisma, weist zwei Ausgänge auf. An einem ersten Ausgang ergibt sich durch die unterschiedlichen auftretenden Phasensprünge bei Messstrahl und Referenzstrahl durch die Überlagerung des Messstrahls und des Referenzstrahls ein Differenzsignal. Das Differenzsignal ist die destruktive Interferenz und des Messstrahls und des Referenzstrahl. An einem zweiten Ausgang ergibt sich eine konstruktive Überlagerung, d. h. ein Summensignal.

Ein wesentlicher Vorteil der Erfindung besteht darin, dass durch die Auswertung des Differenzsignals, welches durch die destruktive Interferenz von Mess- und Referenzstrahl auf dem ersten Detektor detektiert wird, eine im Vergleich zu vorbekannten Verfahren wesentlich erhöhte Genauigkeit erzielt werden kann.

Vorteilhafterweise ist ein zweiter Detektor derart an dem Strahlausgang der interferometrischen Messzelle angeordnet und mit der Messzelle zusammenwirkend ausgebildet, dass der zweite Detektor ein Summensignal detektiert, wobei das Summensignal die konstruktive Interferenz des Messstrahls und des Referenzstrahls ist. Vorteilhafterweise kann das Summensignal dafür verwendet werden, die korrekte Funktion des Lasers zu überprüfen. Das Summensignal ist hier ein Maß für die Laserintensität. Gerade durchstimmbare Laser weisen ein typisches wellenlängenabhängiges Intensitätsprofil auf. Vorteilhafterweise wird somit anhand der Detektion des Summensignals das Differenzsignal normiert werden. Beispielsweise kann die Normierung derart erfolgen, dass das Differenzsignal durch das Summensignal geteilt wird. Das normierte Signal ist somit unabhängig von einer Intensitätsänderung der Lichtquelle. Zudem kann in einfacher Weise überprüft werden, ob der typische Intensitätsverlauf bei Änderung der Wellenlänge vorliegt. Gegebenenfalls kann aufgrund des Summensignals bei Bedarf eine Nachjustage durch den Nutzer erfolgen.

Vorteilhafterweise wird als Detektor ein Detektor mit Bildfeldmatrix verwendet. Da Bildfeldmatrizen typischerweise substratseitig durchstrahlt werden, sind diese bevorzugt mit Antireflexionsschichten ausgeführt, die Interferenzen in diesen Schichten unterdrücken. Zusätzlich weisen die Detektoren vorzugsweise Detektorfenstern mit Fenstermaterialien auf, welche ebenso mit Antireflexionsschichten ausgeführt sind. In einer alternativen Ausführungsform weisen die Detektoren ein Detektorfenster in Keilform auf. Der Keilwinkel ist bevorzugt derart ausgeführt, dass sich über der Abmessung eines Detektorpixels ein optischer Gangunterschied von wenigstens 2 - 3 Wellenlängen ergibt. Ferner besteht eine bevorzugte Ausführungsform der Detektorfenster in der Kombination von Antireflexionsschicht und der Keilform des Fensters. Vorteilhafterweise kann zur Ausnutzung der Intensität des gesamten Querschnitts ein so genanntes Pixelbinning verwendet werden, in dem über mehrere Pixel integriert wird.

Vorteilhafterweise wird die interferometrische Differenzmesszelle mit einem kollimierten Strahlbündel kohärenter Emission einer abstimmbaren Laserquelle betrieben. Der Durchmesser des Strahlbündels muss dabei ausreichend groß sein um Beugungseffekte zu verhindern. Vorzugsweise wird für beide Teilstrahlen ein wohldefiniertes Volumen durchstrahlt. Bevorzug erfolgt eine Ausleuchtung von der Dimension des ortsaufgelösten Detektors am Ausgang der Messzelle. Dadurch ergibt sich ein Mikroskopaufbau mit einer Ortsauflösung die der Größe der Detektorpixel der Bildfeldmatrix entspricht. Typische Dimensionen von Einzelpixeln von Bildfeldmatrizen im infraroten Spektralbereich (d. h. für Wellenlängen im Bereich um 10 $\mu$m) liegen heute bei unter 30 $\mu$m. Somit sind die Dimensionen der Einzelpixel nur einen Faktor 3 entfernt von der Beugungsbegrenzung in diesem Wellenlängenbereich.

Die ortsaufgelöste Information kann in mehrerer Hinsicht verwendet werden:

Zum einen kann die ortsaufgelöste Information bei der Justage der verschiedenen Komponenten des Spektrometers eingesetzt werden.

Vorzugsweise wird zu der Justage ein Interferenzbild detektiert und über eine Rückkopplung auf Stellglieder wie z. B. Piezoelemente, welche optische Mittel im Aufbau der interferometrischen Messzelle bewegen, das Interferenzbild dahingehend optimiert werden kann, dass es einer optimalen Justage entspricht. Vorzugsweise erfolgt die Justage dahingehend, dass optische Mittel im Aufbau der interferometrischen Messzelle versetzt, gekippt und/oder gedreht werden, um auf dem Detektor ein minimales Signal zu erhalten. Vorzugsweise erfolgt weiterhin eine Justage des Eintrittswinkels des Laserstrahl in die Messzelle dahingehend, dass der Detektor zentriert ausgeleuchtet wird.

In einer alternativen Ausführungsform erfolgt die Justage dahingehend, dass optische Mittel im Aufbau der interferometrischen Messzelle versetzt, gekippt und/oder gedreht werden, um eine Abbildung, vorzugsweise eine räumlich periodische Intensitätsmodulation auf dem Detektor zu erzeugen und für die optimale Justage zu nutzen. Zum Beispiel kann die Periode eines Streifenmusters bis hin zu einer möglichst homogenen Ausleuchtung der Bildfeldmatrix maximiert werden.

Ebenso ist es denkbar, ein ortsaufgelöstes Messbild auszulesen, da der Strahlquerschnitt größer und sofern der Pixelabstand des Detektors kleiner als die betrachteten Strukturen sind. Bei Vorliegen von räumlich inhomogenen Proben kann neben der mikroskopischen Verwendung auch innerhalb des Bildfeldes differentiell gemessen werden, so dass örtlich unterschiedliche Bereiche einer Probe verglichen werden können.

Vorzugsweise wird ein Messbereich der interferometrischen Differenzmesszelle temperaturstabilisiert ausgebildet. Da sowohl der Brechungsindex als auch der Absorptionskoeffizient des Trägermaterials von der Temperatur abhängen, ergibt sich hierdurch der Vorteil, dass konstante Messbedingungen sichergestellt werden können.

Die zuvor beschriebene Aufgabe ist weiterhin gelöst durch ein spektroskopisches Verfahren gemäß Anspruch 13. Das erfindungsgemäße Verfahren wird bevorzugt mittels eines erfindungsgemäßen Spektrometers bzw. bevorzugt einer vorzugsweisen Ausführungsform des erfindungsgemäßen Spektrometers durchgeführt.

Das erfindungsgemäße spektroskopische Verfahren umfasst folgende Verfahrensschritte:

A Erzeugen eines Lichtstrahls und Aufteilen des Lichtstrahls in einen Messstrahl und einen Referenzstrahl,

B Durchstrahlen zumindest eines Teilbereichs einer Messtransmissionszelle mit dem Messstrahl,

C Durchstrahlen zumindest eines Teilbereichs einer Referenztransmissionszelle mit dem Referenzstrahl,

D Überlagern des transmittierten Messstrahls mit dem transmittierten Referenzstrahl derart, dass der transmittierte Messstrahl mit dem transmittierten Referenzstrahl überlagert auf zumindest einen Detektor auftritt.

Wesentlich ist hier dass der transmittierte Messstrahl mit dem transmittierten Referenzstrahl derart überlagert wird, dass von einem ersten Detektor ein Differenzsignal detektiert wird, wobei das Differenzsignal die destruktive Interferenz des Messstrahls und des Referenzstrahls ist.

Das erfindungsgemäße spektroskopische Verfahren weist ebenfalls die vorgenannten Vorteile der erfindungsgemäßen interferometrischen Messzelle und des erfindungsgemäßen Spektrometers oder einer der vorzugsweisen Ausführungsformen auf.

In einer vorzugsweisen Ausführungsform des spektroskopischen Verfahrens weist der optische Weg des Messstrahls zwischen Strahlteiler und Strahlvereinigungselement die gleiche optische Weglänge auf wie der optische Weg des Referenzstrahls zwischen Strahlteiler und Strahlvereinigungselement. Dadurch wird eine Messung im Differenzmessverfahren ermöglicht. Vorteilhaft ist hier, dass diese Messung eine im Wesentlichen hintergrundfreie Vermessung ermöglicht.

In einer vorzugsweisen Ausführungsform des spektroskopischen Verfahrens wird der transmittierte Messstrahl mit dem transmittierten Referenzstrahl derart überlagert, dass von einem zweiten Detektor ein Summensignal detektiert wird. Das Summensignal ist hier die konstruktive Interferenz des Messstrahls und des Referenzstrahls. Vorteilhafterweise kann das Summensignal dazu verwendet werden, um beispielsweise die korrekte Funktion des Lasers zu überprüfen. Das Summensignal ist hier ein Maß für die Laserintensität, welche gerade bei durchstimmbaren Lasern einen typischen Wellenlängen und Intensitätsprofil folgt.

Somit kann anhand des Summensignals, welches mit dem zweiten Detektor detektiert wird, in einfacher Weise überprüft werden, ob der typische Intensitätsverlauf bei Veränderung der Wellenlänge vorliegt. Gegebenenfalls kann bei Abweichungen der Benutzer zur Nachjustage aufgefordert werden. Weiterhin wird das Summensignal vorteilhafterweise zur Normierung verwendet, insbesondere, indem das Differenzsignal durch das Summensignal geteilt wird. Hierdurch wird das normierte Signal unabhängig von Intensitätsänderungen der Laserintensität, insbesondere bei Änderung der Wellenlänge.

In einer weiteren vorzugsweisen Ausführungsform durchstrahlt zumindest der Messstrahl vor dem Verfahrensschritt B eine Aufweitungsoptik, welche Aufweitungsoptik derart ausgebildet und im Strahlengang des Spektrometers angeordnet ist, dass zumindest der Messstrahl aufgeweitet wird und dass der Detektor als ortsaufgelöster Detektor ausgestaltet ist. Hierdurch ergibt sich der Vorteil, dass ein paralleles, kollimiertes Strahlenbündel durch die Mess- und Referenztransmissionszelle durchgestrahlt wird. Da der Detektor als ortsaufgelöster Detektor, vorzugsweise als Bildfeldmatrix ausgestaltet ist, kann hier ein ortsaufgelöstes Messbild ausgelesen werden. Dabei liegt der Strahlquerschnitt durchaus im Größenbereich der betrachteten Strukturen und ermöglicht so eine mikroskopische Verwendung. Zusätzlich kann die ortsaufgelöste Information für die Justage des Spektrometers verwendet werden. Die abgebildeten Interferenzbilder werden detektiert über eine Rückkopplung auf Stellglieder, wie beispielsweise Piezoelemente, welche optische Mittel im Interferometeraufbau bewegen, übertragen. Die Justage erfolgt derart, dass ein gewünschtes Interferenzbild erreicht wird, welches einer optimalen Justage entspricht. Vorzugsweise erfolgt die Justage dahingehend, dass optische Mittel im Aufbau der interferometrischen Messzelle versetzt, gekippt und/oder gedreht werden, um auf dem Detektor ein minimales Signal zu erhalten.

Die erfindungsgemäße Vorrichtung und/oder das erfindungsgemäße Verfahren sind grundsätzlich für Anwendungen geeignet, bei denen Infrarotspektroskopie im infraroten Spektralbereich in wässriger Umgebung durchgeführt werden soll. Wasser zeigt im infraroten Spektralbereich eine sehr hohe Absorption, was herkömmliche spektroskopische Methoden hier nur sehr eingeschränkt einsetzbar macht. Gerade im infraroten Spektralbereich liegen aber die meisten charakteristischen Absorptionsprobanden vieler organischer Gruppen. Durch das im Vergleich zu vorbekannten IR-Spektroskopieverfahren sehr viel größere Messvolumen beim Einsatz der interferometrischen Messzelle eröffnen sich neue Untersuchungsmöglichkeiten, wie z. B. In-Vitro-Messungen an biologischen Systemen. Denkbar ist auch eine Belegung der Messtransmissionszelle mit biologischen Systemen an der Innenwand der Messzelle. Weiterhin ist der Einsatz z. B. bei der Überwachung von Trinkwassernetzen und Abläufen von Kläranlagen sowie bei der Überwachung von industriellen Prozessen, die von einer kontinuierlichen Überwachung der Prozessstoffe und Produkte profitieren, möglich.

Weitere vorzugsweise Merkmale und Ausführungsformen der erfindungsgemäßen interferometrischen Messzelle und des erfindungsgemäßen Verfahrens werden im Folgenden anhand von Ausführungsbeispielen und den Figuren erläutert. Dabei zeigt:

Figur 1  schematische Darstellung einer ersten Ausführungsform einer interferometrischen Messzelle,

Figur 2  Darstellung einer ersten Ausführungsform eines Spektrometers mit einer zweiten Ausführungsform einer interferometrischen Messzelle,

Figur 3  schematische Darstellung der Anpassung der optischen Weglänge mittels eines Kohärenzstellglieds.

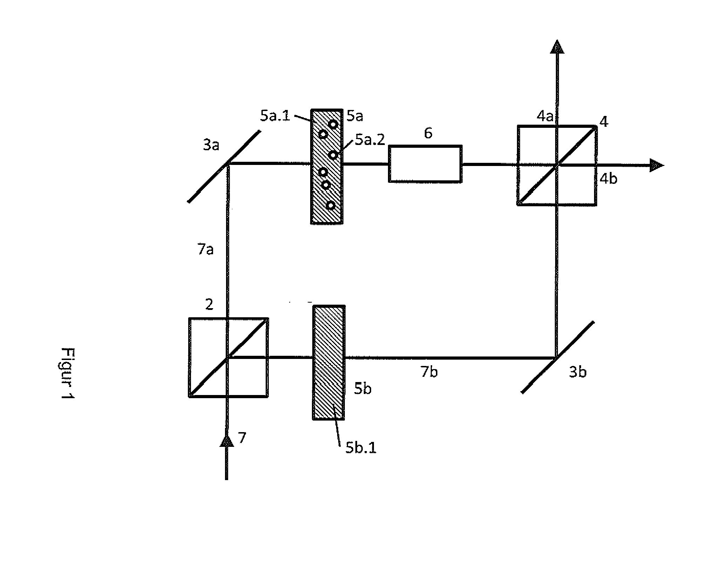

In den Figuren 1 bis 3 bezeichnen gleiche Bezugszeichen gleiche oder gleichwirkende Elemente.

Figur 1 zeigt die schematische Darstellung eines Ausführungsbeispiels einer interferometrischen Messzelle 1. Die interferometrische Messzelle 1 umfasst einen ersten Strahlteiler 2, optische Mittel 3 mit den beiden Teilen 3a und 3b, ein Strahlvereinigungselement 4, eine Messtransmissionszelle 5a und eine Referenztransmissionszelle 5b und ein Kohärenzstellglied 6.

Der Strahlteiler 2 ist als Strahlteilerwürfel ausgebildet und teilt einen Ausgangsstrahl 7 in einen Messstrahl 7a und einen Referenzstrahl 7b. Die Aufteilung des Ausgangsstrahls 7 erfolgt dadurch, dass der Ausgangsstrahl 7 im Strahlteilerwürfel 2 teilweise transmittiert wird und teilweise reflektiert wird. Der transmittierte Anteil ergibt den Messstrahl 7a.1 und der reflektierte Anteil ergibt den Referenzstrahl 7b.1.

Die optischen Mittel 3 umfassen einen ersten Spiegel 3a und einen zweiten Spiegel 3b.

Der Messstrahl 7a.1 wird an dem ersten Spiegel 3a reflektiert und dadurch umgelenkt. Der Spiegel 3a ist so angeordnet, dass der reflektierte Messstrahl 7a.2 im Wesentlichen parallel zum Verlauf des Referenzstrahls 7b.1 reflektiert wird. Nach der Reflektion am Spiegel 3a durchstrahlt der Messstrahl 7a.2 die Messtransmissionszelle 5a. Die Messtransmissionszelle 5a enthält ein Trägermaterial 5a.1 und zusätzlich ein zu untersuchendes Probensystem 5a.2. Auf Grund der Wechselwirkung des Messstrahls 7a.2 mit dem Trägermaterial 5a.1 und dem Probensystem 5a.2 wird die Intensität des Messstrahls 7a.1 abgeschwächt. Der Messstrahl 7a.2 verlässt die Messtransmissionszelle 5a und verläuft durch das Kohärenzstellglied 6. Das Kohärenzstellglied 6 ist ausgebildet, um dem Messtransmissionsstrahl 7a.2 eine zusätzliche optionale Phasenverschiebung $\Delta\varphi$ zuzufügen. Mit Hilfe des Kohärenzstellglieds 6 kann sichergestellt werden, dass Messstrahl 7a und Referenzstrahl 7b zwischen dem ersten Strahlteiler 2 und dem Strahlvereinigungselement 4 eine identische optische Weglänge zurücklegen. Nach dem Kohärenzstellglied 6 verläuft der Messstrahl 7a.2 zum Strahlvereinigungselement 4.

Der Referenzstrahl 7b.1 verläuft vom Strahlteilerwürfel 2 weiter zur Referenztransmissionszelle 5b. Der Referenzstrahl 7b.1 durchstrahlt die Referenztransmissionszelle 5b, welche das Trägermittel 5b.1 enthält. Das Trägermittel 5b.1 entspricht in der Referenztransmissionszelle 5b entspricht dem Trägermittel 5a.1 in der Messtransmissionszelle 5a. Auf Grund der Wechselwirkung des Referenzstrahls 7b.1 mit dem Trägermaterial 5b.1 wird die Intensität des Referenzstrahls 7b.1 abgeschwächt. Die Abschwächung der Intensität ist hier durch das Fehlen des Probensystems 5a.2 in der Referenztransmissionszelle 5b nicht so stark verglichen mit der oben beschriebenen Abschwächung des Messstrahls 7a.2. Nach dem Verlassen der Referenztransmissionszelle 5b verläuft der Referenzstrahl 7b.1 zum zweiten Spiegel 3b. Am zweiten Spiegel 3b wird der Referenzstrahl 7b.1 reflektiert, d. h., umgelenkt. Der Spiegel 3b ist so angeordnet, dass der reflektierte Referenzstrahl 7b.2 im Wesentlichen parallel zum Verlauf des Messstrahls 7a.1 reflektiert wird. Der Referenzstrahl 7b.2 verläuft dann weiter zum Strahlvereinigungselement 4.

Am Strahlvereinigungselement 4 werden Messstrahl 7a.2 und Referenzstrahl 7b.2 wieder überlagert. Das Strahlvereinigungselement 4 ist ebenso als Strahlteilerwürfel ausgebildet. Auf Grund der um 90° gedrehten Ankunftsrichtung des Messstrahls 7a.2 und des Referenzstrahls 7b.2 überlagert der Strahlteilerwürfel jeweils einen transmittierten Teil eines ankommenden Strahls mit dem reflektierten Teil des anderen ankommenden Strahls. Das Strahlvereinigungselement 4 hat zwei Ausgänge, einen Ausgang 4a, bei dem der Messstrahl 7a und der Referenztransmissionsstrahl 7b destruktiv überlagert austreten und einen Ausgang 4b, an dem der Messtransmissionsstrahl 7a und der Referenztransmissionsstrahl 7b konstruktiv überlagert austreten.

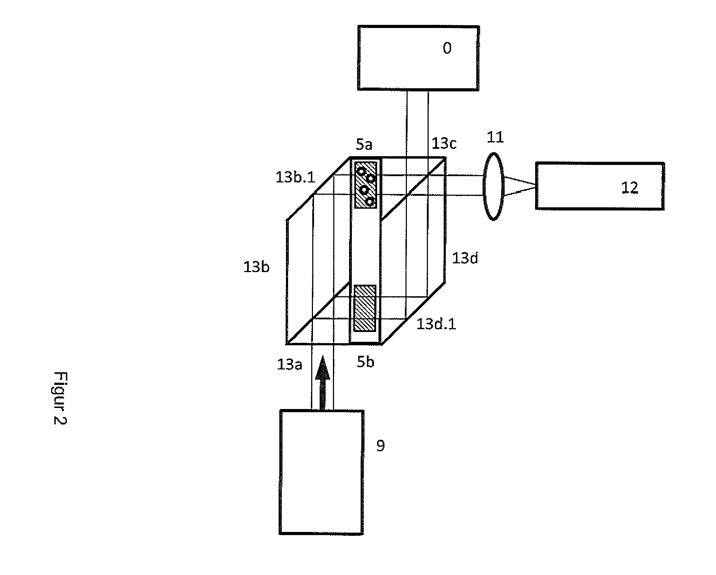

Figur 2 zeigt eine Darstellung eines Ausführungsbeispiels eines erfindungsgemäßen Spektrometers 8 mit einem Ausführungsbeispiel einer erfindungsgemäßen interferometrischen Messzelle 1. Das Spektrometer 8 umfasst eine Laserquelle 9 die ein kollimiertes Strahlbündel bereitstellt, die interferometrische Messzelle 1, einen ersten Detektor 10, eine Optik 11 und einen zweiten Detektor 12.

Die interferometrische Messzelle 1 ist in diesem Ausführungsbeispiel als Prisma 13 ausgestaltet. Das Prisma 13 umfasst vier Teilkristalle (13a, 13b, 13c, 13d). Als Material für die Teilkristalle eignen sich Silizium oder Germanium, in dem vorliegenden Ausführungsbeispiel Germanium.

Der Teilkristall 13a ist als Prisma mit einem Dreieck als Grundfläche ausgestaltet. Das dreieckige Prisma 13a wirkt zusammen mit dem zweiten Teilkristall 13b in der interferometrischen Messzelle 1 als erster Strahlteiler 2 und teilt den Ausgangsstrahl in den Messstrahl 7a und den Referenzstrahl 7b auf (vgl. Fig. 1). Der Messstrahl 7a durchläuft anschließend den zweiten Teilkristall 13b. Der zweite Teilkristall 13b ist als Prisma mit einer trapezförmigen Grundfläche ausgebildet. An der Außenseite 13b.1 des zweiten Teilkristall 13b wird der Messstrahl reflektiert.

Innerhalb des Prismas 13 ist die Transmissionszelle 5 angeordnet. Die Transmissionszelle 5 umfasst die Messtransmissionszelle 5a und die Referenztransmissionszelle 5b. Die Teilkristalle 13a bis 13d des Kristalls 13 sind derart um die Messtransmissionszelle 5 angeordnet, dass der erste Teilkristall 13a und der zweite Teilkristall 13b auf der der Lichtquelle 9 zugewandten Seite der Transmissionszelle 5 angeordnet sind. Die Teilkristall 13c und 13d sind auf der dem Detektor 10 zugewandten Seite der Transmissionszelle 5 angeordnet. Der Messstrahl 7a durchstrahlt die Transmissionszelle 5 im Bereich der Messtransmissionszelle 5a. Der Referenzstrahl verläuft aus dem ersten Teilkristall 13a in die Transmissionszelle 5 und durchstrahlt den Bereich der Referenztransmissionszelle 5b.

Im Anschluss an die Messtransmissionszelle 5a verläuft der Messstrahl im Teilkristall 13c. Der Referenzstrahl 7b verläuft nach der Referenztransmissionszelle 5b im vierten Teilkristall 13d und wird an der Außenseite 13d.1 reflektiert. Im Anschluss daran trifft der Referenzstrahl 7b auf die Grenze zwischen drittem Teilkristall 13c und viertem Teilkristall 13d.

Der dritte Teilkristall 13c wirkt zusammen mit dem vierten Teilkristall 13d als Strahlvereinigungselement. Hier werden der Messstrahl 7a und der Referenzstrahl 7b wieder überlagert. Der Teilkristall 13c ist derart ausgebildet, dass ein Teil des Messstrahls 7a transmittiert wird und zum zweiten Detektor 12 gelangt. Der andere Teil des Messstrahls 7a wird reflektiert und trifft auf den ersten Detektor bzw. Bildfeldmatrix 10. Der Referenzstrahl 7b wird entsprechend teilweise transmittiert und überlagert sich mit dem Teil des Messstrahls 7a.1 der auf den Detektor 10 trifft. Die Strahlen überlagern sich derart, dass hier destruktive Interferenz auftritt. Der andere Teil des Messstrahls 7b wird reflektiert und überlagert sich mit dem transmittierten Teil des Messstrahls 7a, auf dem Detektor 12. Die Überlagerung erfolgt hier derart, dass konstruktive Interferenz auftritt.

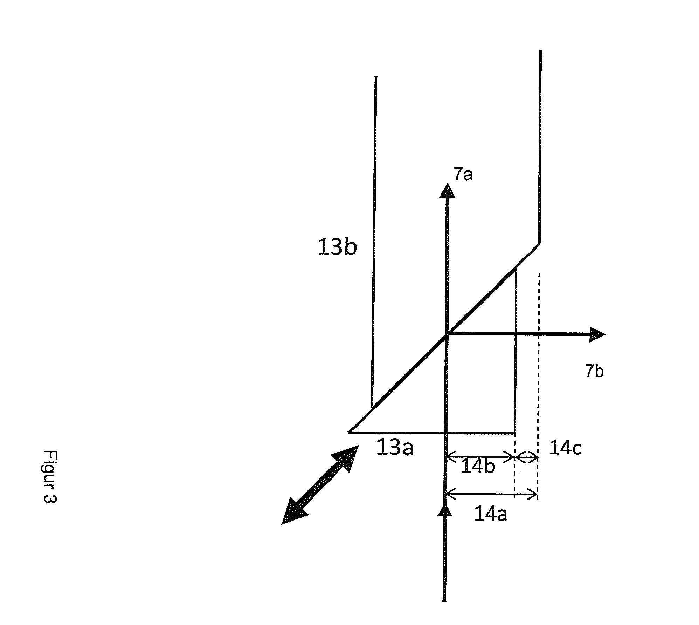

Der Weglängenabgleich der optischen Weglänge des Messstrahls 7a und des Referenzstrahls 7b kann in diesem Ausführungsbeispiel durch Verschieben der optischen Teilkristalle 13a, 13b, 13c und 13d relativ zueinander erfolgen. Zum Beispiel kann durch Parallelverschiebung des Teilkristalls 13a gegenüber 13b, wie unten zu Figur 3 beschrieben, der optische Weg des Referenzstrahls über die relativen Anteile der im Kristall und in Luft zurückgelegten Strecke verändert werden.

Da der Messstrahl 7a und der Referenzstrahl 7b bei korrekt justiertem Spektrometer 8 die gleiche optische Weglänge zurücklegen, detektiert der erste Detektor 10 aufgrund der destruktiven Interferenz nur dann ein Signal, wenn durch die Wechselwirkung des Probenmaterials 5a.2 in der Messtransmissionszelle 5a mit dem Messstrahl 7a ein Intensitätsunterschied zwischen dem Messstrahl 7a und dem Referenzstrahl 7b vorliegt.

Der Detektor 10 ist im vorliegenden Ausführungsbeispiel als Bildfeldmatrix ausgestaltet. Mittels eines Bildfeldmatrix-Detektors können auch räumliche Auflösungen erreicht werden. Die Messzelle muss dazu mit einem parallelen, kollimierten Strahlenbündel betrieben werden. Der Durchmesser des Strahlbündels entspricht vorzugsweise der Dimension der Bildfeldmatrix. Dieses Strahlenbündel wird am Strahlteiler 2 aufgeteilt und folgt dem Strahlengang des Messstrahls 7a und des Referenzstrahls 7b wie oben beschrieben. Die räumliche Auflösung des Detektors 10 ist vergleichbar mit den Maßen der Einzeldetektoren der Bildfeldmatrix, im vorliegenden Fall etwa 30 $\mu$m. Dadurch ergibt sich bei räumlich inhomogenen Proben zusätzlich die Möglichkeit einer mikroskopischen Verwendung der interferometrischen Messzelle 8.

Als Laserquelle 9 wird im vorliegenden Ausführungsbeispiel ein EC-Quantenkaskadenlaser (EC-QCL) eingesetzt. Der EC-Quantenkaskadenlaser stellt eine kohärente, spektral schmalbanding emittierende und breit durchstimmbare Infrarotstrahlungsquelle dar. Die aktiven Schichten des EC-Quantenkaskadenlasers können auf die jeweilige Anwendung abgestimmt werden, z. B. können Bereiche von etwa 25 % des infraroten Spektrums um eine Zentralwellenlänge von ungefähr 9 μm realisiert werden.

Figur 3 zeigt eine schematische Darstellung einer bevorzugten Ausführungsform der Justage der optischen Wegdifferenz. Durch Parallelverschiebung des Teilkristalls 13a gegenüber dem Teilkristall 13b wird der optische Weg des Referenzstrahls über die relativen Anteile einer im Kristall zurückgelegten Teilstrecke (14b) und einer in Luft zurückgelegten Teilstrecke (14c) an einer insgesamt zurückgelegten Strecke (14a) verändert. Analog lässt sich auch der optische Weg des Messstrahls durch Parallelverschiebung von Teilkristall 13c gegenüber 13d (siehe Fig. 2) justieren.

**Patentansprüche**

1. Interferometrische Messzelle (1), umfassend einen ersten Strahlteiler (2), zur Aufteilung eines Ausgangsstrahls (7) in einen Messstrahl (7a) und einen Referenzstrahl (7b) sowie optische Mittel, die derart angeordnet und ausgebildet sind, dass Messstrahl (7a) und Referenzstrahl (7b) an einem Strahlausgang der Messzelle mittels eines optischen Strahlvereinigungselements (4) überlagert austreten, **dadurch gekennzeichnet, dass** die Messzelle (1) zur Durchführung optischer Spektroskopie, vorzugsweise in Verbindung mit einer kohärenten abstimmbaren Lichtquelle ausgebildet ist, indem die Messzelle (1) eine Messtransmissionszelle (5a) umfasst, welche im Strahlengang des Messstrahls (7a) angeordnet ist und die Messzelle eine Referenztransmissionszelle umfasst, welche im Strahlengang des Referenzstrahls (7b) angeordnet ist, wobei Messtransmissionszelle (5a) und Referenztransmissionszelle (5b) jeweils zur Aufnahme von zumindest Trägermaterial ausgebildet sind und die Messzelle (1) derart ausgebildet ist, dass ein optischer Weg des Messstrahls (7a) zwischen Strahlteiler (2) und Strahlvereinigungselement (4) die gleiche optische Länge aufweist wie ein optischer Weg des Referenzstrahl (7b) zwischen Strahlteiler (2) und Strahlvereinigungselement (4).

2. Interferometrische Messzelle (1) nach Anspruch 1, **dadurch gekennzeichnet, dass** das Strahlvereinigungselement (4) derart angeordnet und mit den weiteren Elementen der Messzelle (1) zusammenwirkend ausgebildet ist, dass Messstrahl (7a) und Referenzstrahl (7b) an dem Strahlausgang der Messzelle (1) destruktiv überlagert austreten.

3. Interferometrische Messzelle (1) nach einem der vorangegangenen Ansprüche, **dadurch gekennzeichnet, dass** Messtransmissionszelle (5a) und Referenztransmissionszelle (5b) einstückig als eine Transmissionszelle (5) ausgebildet sind, welche Transmissionszelle (5) in einem Durchstrahlbereich der Messtransmissionszelle (5a) und einem Durchstrahlbereich der Referenztransmissionszelle (5b) äquivalent ausgebildet ist, bevorzugt mit gleicher Wandstärke der Messtransmissionszelle (5a) und der Referenztransmissionszelle (5b) ausgebildet ist, zumindest in den von Mess- oder Referenzstrahl (7a, b) durchstrahlten Bereichen.

4. Interferometrische Messzelle (1) nach einem der vorangegangenen Ansprüche, **dadurch gekennzeichnet, dass** die optischen Mittel zumindest einen optischen Kristall (13) umfassen, welcher optische Kristall (13) derart angeordnet und ausgebildet ist, dass der Strahlengang zumindest des Messstrahls (7a) und/oder des Referenzstrahls (7b) im Wesentlichen im optischen Kristall (13) verläuft, bevorzugt dass der optische Kristall (13) mehrteilig ausgebildet ist und der Strahlengang des Messstrahls (7a) im Wesentlichen in einem ersten Teilkristall (13a) und der Strahlengang des Referenzstrahls (7b) im Wesentlichen in einem zweiten Teilkristall (13b) verlaufen.

5. Interferometrische Messzelle (1) nach einem der vorangegangenen Ansprüche, **dadurch gekennzeichnet, dass** die interferometrische Messzelle (1) zumindest ein optisches Weglängenänderungselement (6) aufweist, welches Weglängenänderungselement (6) zur Änderung der optischen Weglänge des Messstrahls (7a) und/oder des Referenzstrahls (7b) ausgebildet ist, vorzugsweise ein Kohärenzstellglied, insbesondere, dass mittels des Weglängenänderungselements (6) im Strahlengang zumindest des Messstrahls (7a) und/oder des Referenzstrahls (7b) ein Luftspalt mit wahlweise vorgebbarer Breite einstellbar ist, bevorzugt, dass die Messzelle nach Anspruch 4 ausgebildet ist und das Weglängenänderungselement (6) ausgebildet ist zur Änderung der optischen Weglänge des Messstrahls (7a) und/oder des Referenzstrahls (7b) mittels Verschieben der Teilkristalle (13a, 13b, 13c, 13d) relativ zueinander.

6. Interferometrische Messzelle (1) nach Anspruch 5, **dadurch gekennzeichnet, dass** das optische Weglängenänderungselement Mittel zur Temperaturstabilisierung umfasst, welche derart ausgebildet und im Strahlengang von Mess- und/oder Referenzstrahl angeordnet sind, dass ein Temperaturunterschied zwischen Bereichen, in welchen Messstrahl einerseits und Referenzstrahl andererseits verlaufen, vorgebbar ist.

7. Interferometrische Messzelle (1) nach einem der vorangegangenen Ansprüche,
   **dadurch gekennzeichnet,**
   **dass** zumindest die Messtransmissionszelle (5a) derart in einen Trägermaterialkreislauf integrierbar ausgebildet ist, dass bei Verwendung ein erstes Trägermaterial, welches Probenmaterial aufweist, die Messtransmissionszelle (5a) durchströmt, bevorzugt dass die Referenztransmissionszelle (5b) derart in einen Trägermaterialkreislauf integrierbar ausgebildet ist, dass bei Verwendung das erste oder ein separates, zweites Trägermaterial die Referenztransmissionszelle (5b) durchströmt, insbesondere bevorzugt, dass ein Durchflusskreislauf für das zweite Trägermaterial mit Umwälzmitteln für das zweite Trägermaterial vorgesehen ist, in welchem Durchflusskreislauf die Referenztransmissionszelle (5b) angeordnet ist.

8. Spektrometer umfassend eine vorzugsweise kohärente Lichtquelle (9) und zumindest einen Detektor (10),
   **dadurch gekennzeichnet,**
   **dass** das Spektrometer, eine interferometrische Messzelle (1) gemäß einem der vorangegangenen Ansprüche umfassst,
   wobei die interferometrische Messzelle (1) zwischen der Lichtquelle (9) und dem Detektor (10) angeordnet ist, derart, dass ein aus dem Strahlausgang austretender Lichtstrahl auf den Detektor (10) trifft.

9. Spektrometer nach Anspruch 8,
   **dadurch gekennzeichnet,**
   **dass** die Lichtquelle (9) durchstimmbar, insbesondere bevorzugt als EC-Quantenkaskadenlaser ausgebildet ist.

10. Spektrometer nach einem der Ansprüche 8 oder 9,
    **dadurch gekennzeichnet,**
    **dass** ein erster Detektor derart an dem Strahlausgang der interferometrischen Messzelle (1) angeordnet und mit der Messzelle (1) zusammenwirkend ausgebildet ist, dass der erste Detektor (10) ein Differenzsignal detektiert wobei das Differenzsignal die destruktive Interferenz des Messstrahls (7a) und des Referenzstrahls (7b) ist und/oder dass ein zweiter Detektor derart an dem Strahlausgang der interferometrischen Messzelle (1) angeordnet und mit der Messzelle (1) zusammenwirkend ausgebildet ist, dass der zweite Detektor (12) ein Summensignal detektiert, wobei das Summensignal die konstruktive Interferenz des Messstrahls (7a) und des Referenzstrahls (7b) ist.

11. Spektrometer nach einem der Ansprüche 8 bis 10,
    **dadurch gekennzeichnet,**
    **dass** der Detektor (10) als ortsaufgelöster Detektor (10) ausgestaltet ist, wobei vorzugsweise eine Detektionsfläche des ortsaufgelösten Detektors (10) vollständig ausgeleuchtet ist, insbesondere bevorzugt eine Breite der Detektionsfläche einem Durchmesser eines Strahlbündels des Messstrahls (7a) und/oder des Referenzstrahls (7b) entspricht.

12. Spektroskopisches Verfahren, insbesondere mittels Verwendung eines Spektrometers gemäß einem der Ansprüche 8 bis 11, folgende Verfahrensschritte umfassend:

    A Erzeugen eines Lichtstrahls und Aufteilen des Lichtstrahls (7) in einen Messstrahl (7a) und einen Referenzstrahl (7b),
    B Durchstrahlen zumindest eines Teilbereiches einer Messtransmissionszelle (5a) mit dem Messstrahl (7a),
    C Durchstrahlen zumindest eines Teilbereiches einer Referenztransmissionszelle (5b) mit dem Referenzstrahl (7b),
    D Überlagern des transmittierten Messstrahls (7a) mit dem transmittierten Referenzstrahl derart, dass der transmittierte Messstrahl (7a) mit dem transmittierten Referenzstrahl (7b) überlagert auf zumindest einem Detektor (10) auftrifft,

    wobei der transmittierte Messstrahl mit dem transmittierten Referenzstrahl (7b) derart überlagert wird, dass von einem ersten Detektor (10) ein Differenzsignal detektiert wird, wobei das Differenzsignal die destruktive Interferenz des Messstrahls (7a) und des Referenzstrahls (7b) ist.

13. Spektroskopisches Verfahren nach Anspruch 12,
    **dadurch gekennzeichnet,**
    **dass** der optische Weg des Messstrahls (7a) zwischen Strahlteiler (2) und Strahlvereinigungselement (4) die gleiche optische Weglänge aufweist wie der optische Weg des Referenzstrahls (7b) zwischen Strahlteiler (2) und Strahlvereinigungselement (4).

14. Spektroskopisches Verfahren nach Anspruch 12 oder 13,
    **dadurch gekennzeichnet,**
    **dass** der Detektor (10) als ortsaufgelöster Detektor (10) ausgestaltet ist, wobei vorzugsweise eine Detektionsfläche des ortsaufgelösten Detektors (10) vollständig ausgeleuchtet ist, insbesondere bevorzugt eine Breite der Detektionsfläche einem Durchmesser eines Strahlbündels des Messstrahls (7a) und/oder des Referenzstrahls (7b) entspricht.

15. Spektroskopisches Verfahren nach Anspruch 14,

**dadurch gekennzeichnet,**
**dass** mittels des ortsaufgelösten Detektors (10) eine Justage des Spektrometers erfolgt, vorzugsweise derart, dass auf dem ortsaufgelösten Detektor (10) ein gewünschtes Interferenzbild erreicht wird, welches einer optimalen Justage entspricht, höchst vorzugsweise indem optische Mittel im Aufbau des Spektrometers und/oder der interferometrischen Messzelle versetzt, gekippt und/oder gedreht werden.

Figur 1

Figur 2

Figur 3